# EUROPEAN PATENT APPLICATION

(11) **EP 1 284 169 A2**
(43) Date of publication of application: **19.02.2003**
(21) Application number: 02018009.7
(22) Date of filing: 12.08.2002
(51) Int. Cl.: B23K 10/00, B23K 26/14

(54) **Flow amount adjustment apparatus and processing apparatus**

(30) Priority: 17.08.2001 JP 2001247663
(71) Applicant: KOIKE SANSO KOGYO CO., LTD, Edogawa-ku, Tokyo (JP)
(72) Inventor: Furujo, Akira, Edogawa-ku, Tokyo (JP)
(74) Representative: Patentanwälte Westphal, Mussgnug & Partner

(57) **Abstract**

This invention provides a flow amount adjustment apparatus able to adjust flow amount with high reliability at a low cost without being oversized.

The flow amount adjustment apparatus has a plurality of orifices having different bore diameter for a predetermined flow amount, respectively, the orifices being opened and closed by an open-close member, respectively; a primary piping connected to each of the orifices for supplying gas adjusted to a prescribed pressure; and a secondary piping connected to each of the orifices for gathering gas passed through an opened orifice or a plurality of opened orifices, wherein one orifice or a plurality of orifices capable of satisfying a prescribed flow amount are selected and opened.

## Description

### BACKGROUND OF THE INVENTION

### 1. Field of the Invention

This invention relates to a flow amount adjustment apparatus for adjusting the flow amount of gas to be supplied to a processing torch injecting the gas for processing, e.g., cutting and welding, a workpiece, and a processing apparatus using the flow amount adjustment apparatus.

### 2. Description of Related Art

A plasma cutting torch, a laser cutting torch, or a gas cutting torch is used for cut-processing a steel plate; a plasma processing torch or a laser processing torch is used for cutting, grooving, or welding a ferrous metal such as a steel plate or a stainless steel plate, or a non-ferrous metal such as a copper plate or an aluminum plate; and a laser processing torch is used for cutting or grooving such as a wood material or a plastic plate.

A case of cutting a steel plate will hereinafter be explained as a representative example of the aforementioned processing. For example, in a case of cutting a steel plate using a plasma cutting torch, a pilot arc is formed by supplying plasma gas to the surrounding of an electrode formed at the plasma cutting torch in making discharge between the electrode and a nozzle, and main arc is formed by contacting the pilot arc to the steel plate and simultaneously rendering discharge between the electrode and the steel plate and injected to the steel plate, to thereby cut the steel plate by melting and oxidizing the steel plate and removing melt and oxide. The plasma cutting torch attached with nozzles having different bore diameters according to the thickness of the steel plate determines a gas flow amount according to the nozzles, or the plasma cutting torch using a sole nozzle determines a gas flow amount according to the plate thickness.

In cutting a steel plate with a laser cutting torch, a laser beam is irradiated upon the steel plate from a nozzle for melting the steel plate and an assist gas is simultaneously injected for removing the melt, to thereby cut the steel plate. The laser cutting torch has attached thereto nozzles having different bore diameters according to the thickness of the steel plate and is prescribed with a gas flow amount in correspondence to the nozzles, or the laser cutting torch has employed thereto a sole nozzle and is prescribed with a gas flow amount in correspondence to the plate thickness.

In cutting a steel plate with a gas cutting torch, flame is injected from a burner orifice formed at the gas cutting torch for preheating the steel plate and a cutting oxygen is subsequently injected for oxidizing the steel plate and removing the oxide, to thereby cut the steel plate. The gas cutting torch also has attached thereto burner orifices with count corresponding to the thickness of the steel plate and is prescribed with a gas flow amount in correspondence to the count.

In a case where the cutting torch is a plasma cutting torch, the flow amount of plasma gas supplied to the surrounding of an electrode is managed strictly. The following apparatuses are examples for supplying plasma gas to a plasma cutting torch, in which the apparatuses are used selectively: an apparatus having a float type flow amount meter and a needle valve combined thereto, in which an operator is required to manipulate the needle valve for adjusting the flow amount whenever performing a cutting operation; an apparatus having plural orifices capable of ensuring a prescribed flow amount for each nozzle, in which one orifice corresponding to the nozzle attached to the plasma cutting torch is selected for adjusting the flow amount; and an apparatus using a consistent flow amount element (referred as a mass flow device), in which necessary flow amount information is memorized into the mass flow device for being controlled automatically (see Japanese Patent Publication No.Hei 9-042651).

In the foregoing case where the steel plate is cut by a cutting torch such as a plasma cutting torch, a laser cutting torch, or a gas cutting torch, an optimum nozzle according to the steel plate thickness is selected and attached to the cutting torch, and an optimum gas flow amount is adjusted and supplied according to the attached nozzle.

In some case, an operation called piercing is performed in cutting a steel plate with a cutting torch by forming a hole piercing the surface of the steel plate in a thicknesswise direction, arid in such case, it is preferable to change the gas flow amount supplied to the cutting torch during the piercing operation and the gas flow amount supplied to the cutting torch during the cutting operation. In such a case, the flow amount supplied to the cutting torch is changed by arranging a piercing orifice for flowing therethrough a flow amount suitable for performing the piercing operation and a cutting orifice for flowing therethrough a flow amount suitable for performing the cutting operation for allowing the piercing orifice to be selected and opened during piercing and the cutting orifice to be selected and opened during cutting.

In the aforementioned flow amount adjustment apparatus having the flow amount meter and the needle valve combined thereto, the operator adjusts the flow amount by manipulating the needle valve while checking the rise position of the float. Therefore, although the flow amount can be adjusted with high preciseness, such flow amount apparatus is difficult to operate and difficult in changing the flow amount in the midst of performing a sequential operation.

In the aforementioned flow amount adjustment apparatus enabling selection of plural orifices capable of ensuring a prescribed flow amount of a nozzle, each of the orifices is formed to flow therethrough a flow amount in accordance with the operation state (type of operation, such as piercing or cutting) of the corresponding nozzle. Accordingly, such flow amount apparatus requiring the orifices to be formed in a number corresponding to all anticipated type of operation causes oversize of the apparatus and complicates control.

In the aforementioned mass flow device, gas can be supplied in a sure and steady flow amount since the gas flow amount can be adjusted according to the flow amount information memorized therein beforehand. Nevertheless, the structure of the apparatus is complicated and the cost thereof is expensive.

It is an object of this invention to provide a flow amount adjustment apparatus able to adjust flow amount with high reliability at a lower cost than the mass flow device without being oversized, and a processing apparatus using the flow amount adjustment apparatus.

### SUMMARY OF THE INVENTION

For solving the aforementioned problems, a flow amount adjustment apparatus of this invention has a plurality of orifices having different bore diameter for a predetermined flow amount, respectively, the orifices being opened and closed by an open-close member, respectively; a primary piping connected to each of the orifices for supplying gas adjusted into a prescribed pressure; and a secondary piping connected to each of the orifices for gathering gas passed through an opened orifice or a plurality of opened orifices, wherein one orifice or a plurality of orifices capable of satisfying a prescribed flow amount are selected and opened.

When a flow amount is prescribed, an orifice capable of satisfying such prescribed flow amount can be selected, since the flow amount adjustment apparatus has a plurality of orifices having different bore diameter for a predetermined flow amount, respectively, the orifices being opened and closed by an open-close member, respectively; a primary piping connected to each of the orifices for supplying gas adjusted into a prescribed pressure; and a secondary piping connected to each of the orifices for gathering gas passed through an opened orifice or a plurality of opened orifices. In such case, the number of the selected orifice can be one orifice or a plurality of orifices, in which the prescribed flow amount can be satisfied by operating and releasing the open-close member(s) corresponding to all of the selected orifice(s).

It is preferable for the flow amount adjustment apparatus to have a control section for selecting one or a plurality of orifices capable of satisfying the prescribed flow amount and for sending a driving signal to the open-close member of the selected orifice(s), in which the open-close member is activated by the driving signal for opening and closing the orifice(s).

The flow amount adjustment apparatus can be remotely operated by prescribing a flow amount from the external since the flow amount adjustment apparatus has therein the control section for selecting one orifice or a plurality of orifices capable of satisfying the prescribed flow amount and for sending a driving signal to the open-close member of the selected orifice(s).

A processing apparatus for this invention has a processing torch selected from a plasma processing torch, a laser processing torch, and a gas processing torch, in which the processing torch is connected to the secondary piping of one of the aforementioned the flow amount adjustment apparatus.

The processing apparatus is able to ensure the gas flow amount necessary for the selected processing torch since the processing torch selected from a plasma processing torch, a laser processing torch, and a gas processing torch is connected to the secondary piping of the flow amount adjustment apparatus.

### BRIEF DESCRIPTION OF THE DRAWINGS

The above and other objects and features of the invention are apparent to those skilled in the art from the following preferred embodiments thereof when considered in conjunction with the accompanied drawings, in which:
FIG.1 is an explanatory view showing an example of a processing apparatus having a processing torch connected to a flow amount adjustment apparatus;
FIG.2 is an explanatory view showing a structure of a flow amount adjustment apparatus;
FIG.3 is an explanatory view showing a structure of a plasma cutting apparatus as an embodiment of a processing apparatus using a flow amount adjustment apparatus;
FIG.4 is an explanatory plan view showing a structure of a cutting machine having a plasma cutting apparatus mounted thereon;
FIG.5 is an explanatory front view showing a structure of a cutting machine having a plasma cutting apparatus mounted thereon; and
FIG.6 is an explanatory view showing an example of a control section during control of the gas flow amount.

### DESCRIPTION OF THE PREFERRED EMBODIMENTS

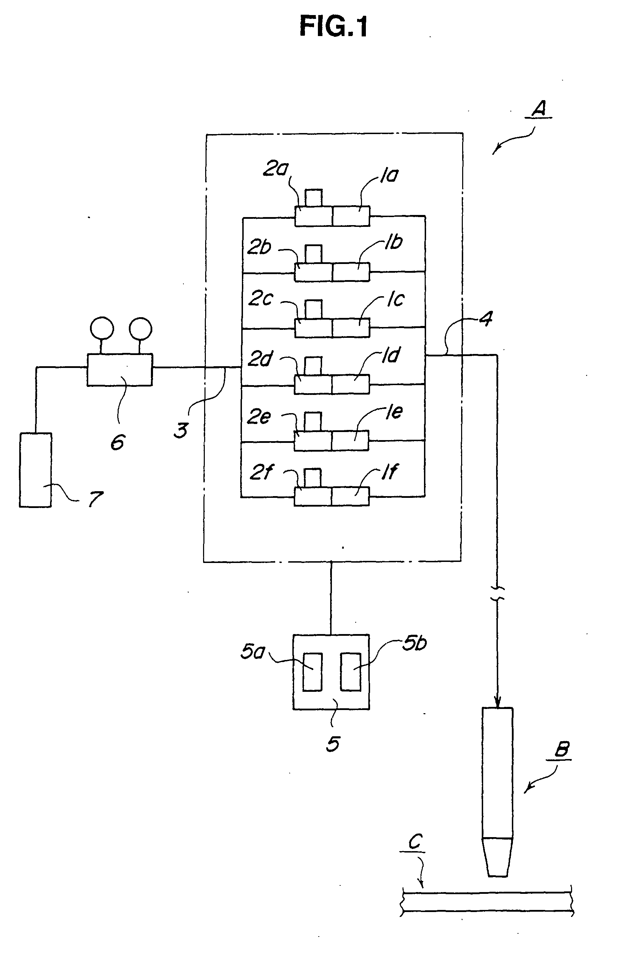

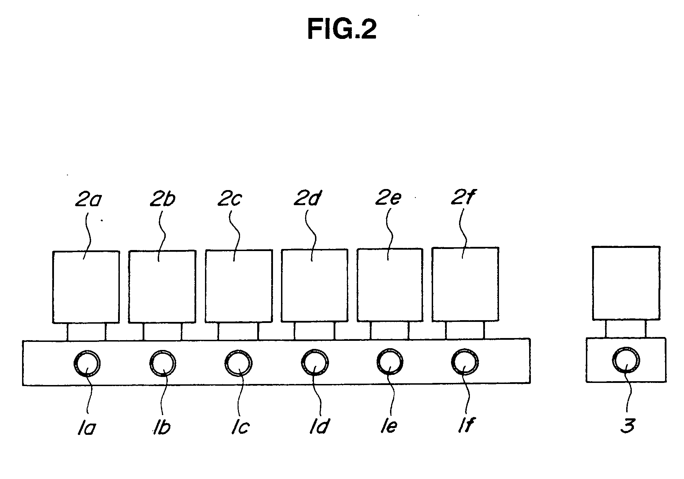

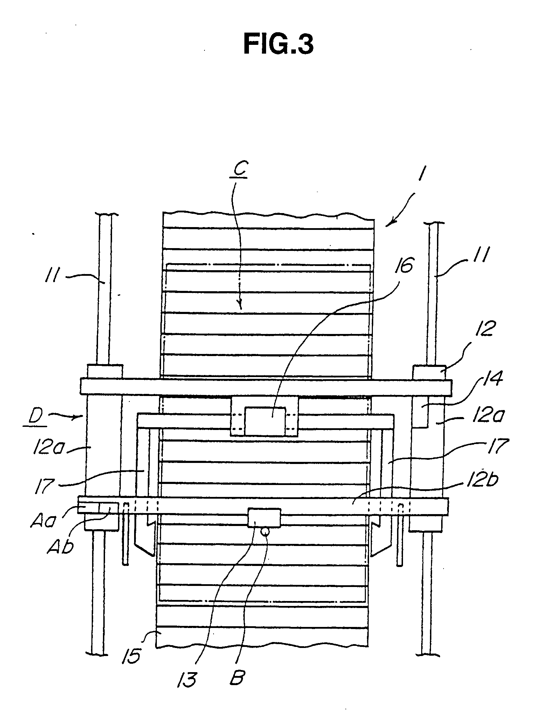

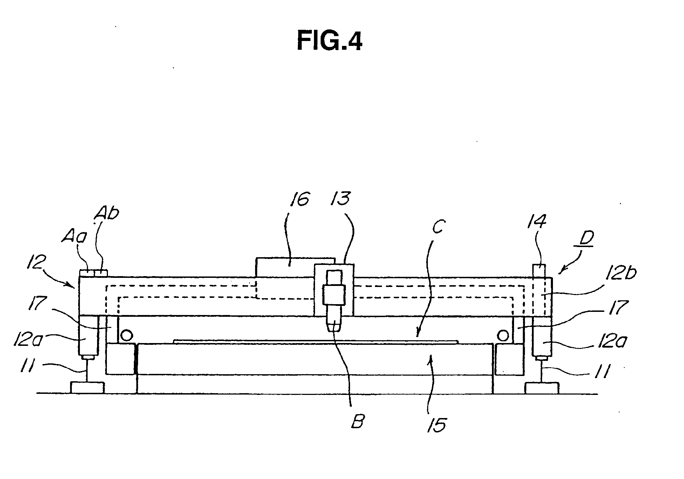

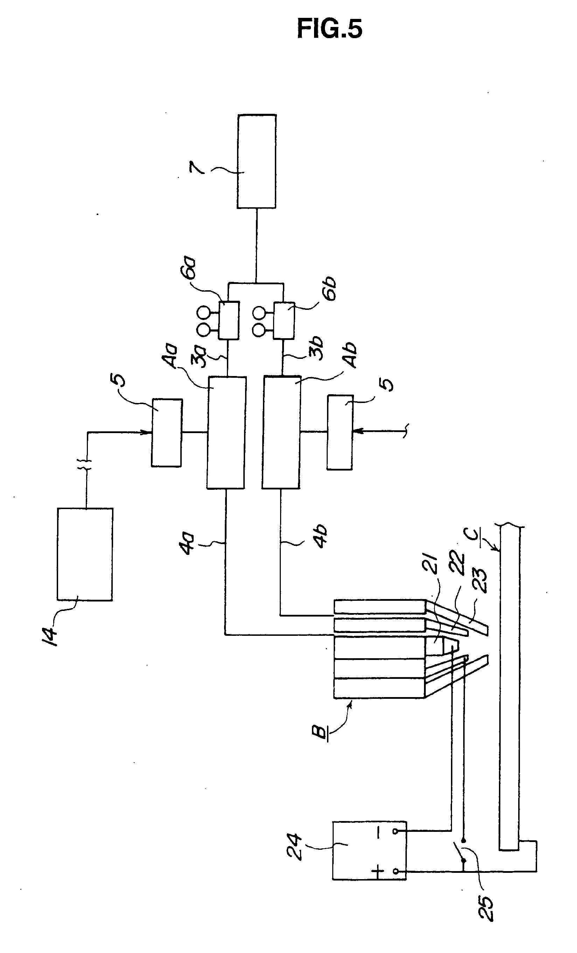

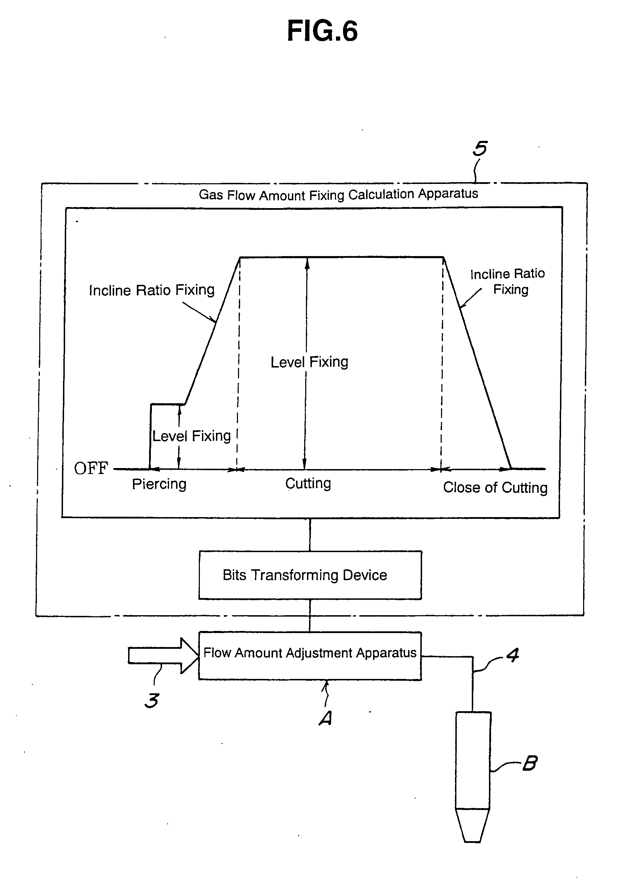

A preferable embodiment of the flow amount adjustment apparatus and the processing apparatus will hereinafter be described with reference to the drawings. FIG.1 is an explanatory view showing an example of a processing apparatus having a processing torch connected to a flow amount adjustment apparatus. FIG.2 is an explanatory view showing a structure of a flow amount adjustment apparatus. FIG.3 is an explanatory view showing a structure of a plasma cutting apparatus as an embodiment of a processing apparatus using a flow amount adjustment apparatus. FIG.4 is an explanatory plan view showing a structure of a cutting machine having a plasma cutting apparatus mounted thereon. FIG.5 is an explanatory front view showing a structure of a cutting machine having a plasma cutting apparatus mounted thereon. FIG.6 is an explanatory view showing an example of a control section during control of the gas flow amount.

A structure of a flow amount adjustment apparatus ***A*** will first be explained with reference to FIG.1 and FIG.2. The flow amount adjustment apparatus ***A*** has plural orifices 1a to 1f having different bore diameter for a predetermined flow amount, open-close members 2a to 2f formed in correspondence to each of the orifices 1a to 1f, a primary piping 3 for supplying gas with a prescribed pressure to the orifices 1a to 1f, and a secondary piping 4 for gathering gas having passed through each of the orifices 1a to 1f, wherein one or plural open-close members 2a to 2f are simultaneously activated to open the orifices 1a to 1f, so that the flow amount of the gas supplied to the secondary piping 4 can be adjusted to a desired value.

The gas adjusted by the flow amount adjustment apparatus ***A*** is not to be restricted to a particular type of gas, but is to be determined suitably in relation to the tool to be connected to the secondary piping 4. In this embodiment, oxygen is employed as a plasma gas to be supplied to a plasma cutting torch ***B*** (described afterwards).

There is no particular restriction concerning the range of flow amount of gas to be supplied to the secondary side by the flow amount adjustment apparatus ***A*** as long as the range between the minimum flow amount and the maximum flow amount can be ensured in relation to the flow amount required by the tool to be connected to the secondary piping 4 or in relation to the number of the tool(s). In this embodiment, the minimum supply of oxygen to the plasma cutting torch ***B*** (described afterwards) is 1 liter per minute, and the maximum thereof is 39 liters per minute.

Accordingly, the structure of the flow amount adjustment apparatus ***A*** is not to be limited to that of this embodiment, but can be suitably applied for satisfying the required flow amount in accordance with the purpose of the tool or the number of tools.

In the flow amount adjustment apparatus ***A***, the orifices 1a to 1f each has different bore diameter for a predetermined flow amount. That is, each of the orifices 1a to 1f is predetermined for a flow amount in accordance with the pressure of the gas supplied through the primary piping 3, and the flow amount value for each of the orifices 1a to 1f is different. The flow amount for each of the orifices 1a to 1f is not to be restricted in particular, but when the pressure of the primary piping 3 is prescribed, the flow amount corresponding to the pressure is required to be distinct and the flow amount value for each of the orifices is to be different. Accordingly, when a necessary flow amount is requested at the secondary piping 4, the orifice 1a to 1f capable of satisfying such flow amount can be selected since the flow amount property for each of the orifices 1a to1f is distinctly predetermined.

In this embodiment, the orifice 1a is predetermined for supplying 1 liter of gas per minute, which is followed by the orifice 1b for supplying a flow amount of 2 liters per minute, the orifice 1c for supplying a flow amount of 4 liters per minute, the orifice 1d for supplying a flow amount of 8 liters per minute, the orifice 1e for supplying a flow amount of 10 liters per minute, and the orifice 1f for supplying a flow amount of 20 liters per minute.

The open-close members 2a to 2f are formed in correspondence with each of the orifices 1a to 1f for opening and closing each of the corresponding orifices 1a to 1f. The open-close members 2a to 2f using the so-called openable valve can be activated separately by hand-operation or remote operation. Hand-operation or remote operation are not to be limited as choices for the open-close members 2a to 2f, but are to be selected suitably in correspondence to the tool to be connected to the secondary piping 4 or the structure of the apparatus.

In this embodiment, since the secondary piping 4 of the flow amount adjustment apparatus ***A*** is connected to a plasma cutting torch ***B*** (described afterwards) and since the plasma cutting torch ***B*** is applied to a processing apparatus for cutting a workpiece ***C*** (see FIG.1), such as a steel plate, by moving the plasma cutting torch ***B*** within a plane, an electromagnetic valve capable of remote operation is used for each of the open-close members 2a to 2f.

The flow amount adjustment apparatus ***A*** has a control section 5 connected thereto serving to control the opening and closing of the open-close member 2a to 2f. The control section 5 has a calculation section 5a and a memory section 5b. The calculation section 5a selects the orifice 1a to 1f capable of satisfying a flow amount for the secondary piping 4 based on a command of the flow amount to the control section 5, and the open-close member 2a to 2f corresponding to the selected orifice 1a to 1f is driven to supply gas when a command to supply the gas is given.

For example, when the control section 5 is given a command of supplying each minute 19 liters of gas to the plasma cutting torch ***B*** connected to the secondary piping 4, the calculation section calculates the flow amount of 19 liters per minute into a result of, for example, 1, 8, and 10, and thereby the orifices 1a, 1d, and 1e are selected for opening and are then opened when a driving signal is transmitted to the open-close members 2a, 2d, and 2e in correspondence to the supply command. Accordingly, the secondary piping 4 is supplied with gas of 19 liters per minute.

The primary piping 3 via a pressure regulator 6 is connected to a gas supply source 7 such as a factory piping, a cylinder or a cold evaporator. Therefore, when gas of high pressure is supplied from the gas supply source 7, the gas can be adjusted to a desired pressure by the pressure regulator 6 and supplied to the primary piping 3.

The secondary piping 4 gathers the gas, which is passed through one or plural orifice(s) of the flow amount adjustment apparatus A and adjusted to a desired flow amount, and thus supplies the gas to the tool connected on a downstream side. A steel pipe, or a hose or the like is employed as the primary piping 3 and the secondary piping 4.

In the foregoing flow amount adjustment apparatus, when a flow amount required for the tool connected the secondary piping 4 is prescribed, one or a plurality of orifice(s) 1a to 1f for satisfying such flow amount can be selected since the orifices 1a to 1f have different bore diameters for a predetermined flow amount. Subsequently, the open-close member 2a to 2f corresponding to the selected orifice 1a to 1f are opened to enable the gas supplied from the primary piping 3 to be supplied to the secondary piping 4 via the selected orifice 1a to 1f.

In a case where the workpiece ***C*** is cut by the plasma cutting torch ***B,*** plasma gas such as oxygen, inert gas including nitrogen, or air included with nitrogen are sometimes supplied for preventing oxidization of the electrode, especially in the finish of such cutting; in such case where the supply source 7 arranged on the upstream side of the primary piping is of oxygen, nitrogen, air or the like, the pressure regulator 6 could preferably be arranged in correspondence to each of the supply sources and connected to the flow amount adjustment apparatus ***A*** via a switching valve, or the pressure regulator 6 and the flow amount adjustment apparatus ***A*** could preferably be arranged in correspondence to a plurality of supply sources 7 and switch at the side of the secondary piping 4.

Regardless of such preference, the example shown in the drawing illustrates a basic structure, and the structure of the primary piping 3 on the upstream side and the structure of the secondary piping 4 of the downstream side are to be modified suitably according to the actual apparatus.

Next, a structure of a cutting machine ***D*** having the plasma cutting torch ***B*** mounted thereon will be explained as a processing apparatus using the flow amount adjustment apparatus ***A*** with reference to FIG.3 to FIG.6. The cutting machine ***D*** shown in the figure is a numerical control (NC) cutting machine. The numerical information corresponding to the cut shape intended for the workpiece ***C*** is memorized beforehand into an NC device to drive the cutting machine ***D*** based on the information and cut the workpiece ***C*** into the intended shape.

Accordingly, the cutting machine ***D*** has: a gate-shaped travel carriage 12 comprising a saddle 12a placed movably on a pair of rails 11 being separated according to a prescribed cutting specification and thus lying parallel to each other, and a garter 12b arranged perpendicular to the rail 11; and a transverse carriage 13 having mounted thereto the plasma cutting torch ***B*** being arranged transversely movable with respect to the garter 12b of the travel carriage 12. The travel carriage 12 driven by a travel motor (not shown) is able to move along the rail 11 at a desired speed, and the transverse carriage 13 driven by a transverse motor (not shown) is able to transversely move along the garter 12b at a desired speed.

The travel carriage 12 has an NC device 14 mounted thereto, in which the NC device 14 has installed therein a control program of the cutting device ***D*** such as information on the targeted cut shape, required cutting speed when cutting such shape, or a control program such as operation order of the plasma cutting torch ***B*** (for example, piercing, cutting, and then finish) when cutting the workpiece ***C***, and thereby, when the thickness, material, or shape of the workpiece ***C*** is determined, a signal, information on the required travel path of the plasma cutting torch ***B*** for cutting such shape (driving information for the travel motor or the transverse motor), or speed information according to the operation order performed sequentially are generated and transmitted to each corresponding device.

The rails 11 have a cutting surface plate 15 arranged therebetween, in which the cutting surface plate 15 has the workpiece ***C*** placed thereon. The garter 12b of the travel carriage 12 has a dross collecting device 16 mounted thereon, in which the dross collecting device 16 has a duct 17 arranged thereto along the opposite sides of the cutting surface plate 15 and extended to the position of the plasma cutting torch ***B.***

Plural flow amount adjustment apparatuses ***A*** required for the plasma cutting torch ***B*** are arranged at a prescribed position of the garter 12b of the travel carriage 12. That is, plural flow amount adjustment apparatuses ***A*** are required in correspondence to the type of gas or the supply path necessary for the employed plasma cutting torch ***B*** in a case where the plasma cutting torch ***B*** supplies a plurality of gases including plasma gas to be supplied to the surrounding of an electrode 21, and a secondary gas flow to be supplied between a nozzle 22 and a cap 23 as shown in FIG.5.

In a case where the plasma gas is changed from oxygen to nitrogen in the finish of the cutting, a flow amount adjustment apparatus ***A*** supplying a prescribed amount of nitrogen to the surrounding of the electrode 21 in correspondence to a signal for the finish of the cutting is required.

The garter 12b has two flow amount adjustment apparatuses ***Aa, Ab*** arranged thereto since the plasma cutting torch ***B*** employed in this embodiment is a plasma cutting torch capable of forming a secondary gas flow at the surrounding of the plasma gas (plasma arc).

The control section 5 for each of the flow amount adjustment apparatuses ***Aa*, *Ab*** is connected to the NC device 14 of the cutting machine ***D,*** in which the control section 5 calculates the flow amount based on a signal from the NC device, selects the orifice 1a to 1f, and thus drives the open-close member 2a to 2f corresponding to the selected orifice 1a to 1f on the basis of a driving signal.

More particularly, in the control section 5 for at least the flow amount adjustment apparatus ***Aa*** supplying plasma gas to the plasma cutting torch ***B*,** the memory section 5b memorizes beforehand the information concerning the optimum gas flow amount for each step (for example, piercing step, transfer step from piercing to cutting, cutting step, transfer step from cutting to finish) in the process shown in FIG.6 of cutting the workpiece ***C*** with the plasma cutting torch ***B*** and also the information for changing the gas flow amount into the memory of the memory section 5b, and the calculation section 5a, in a case when the NC device 14 transmits an activation command for the plasma cutting torch ***B***, calculates the necessary flow amount in correspondence to the transmitted command, and thereby an orifice 1a to 1f for satisfying the calculated flow amount is selected and thus a driving signal is transmitted to the open-close member 2a to 2f corresponding to the selected orifice 1a to 1f.

The electrode 21 attached to the plasma cutting torch ***B*** is connected to a power source 24, and the nozzle 22 is connected to the power source 24 via a switch 25. The workpiece C is connected to the same pole as that of the nozzle 22 of the power source 24.

With the cutting machine ***D***, cutting information including, for example, information concerning the targeted cut shape for the workpiece ***C*** or information concerning the speed corresponding to the thickness or material of the workpiece ***C*** are first memorized beforehand into the NC device14, and flow amount information for supplying plasma gas during the process starting from piercing, cutting, and then finish of the cutting is memorized into the memory section 5b of the control section 5 of the flow amount adjustment apparatus ***A*.**

Then, as the operation of the cutting machine ***D*** is started, the travel motor and the transverse motor are activated based on a driving signal from the NC device 14, and the plasma cutting torch ***B*** is then moved to a prescribed piercing position of the workpiece ***C.***

Then, as the piercing operation of the plasma cutting torch ***B*** is started, a signal to initiate the piercing operation is transmitted from the NC device 14 to each control section 5, and the control section 5 for the flow amount adjustment apparatus ***Aa*** calculates the flow amount corresponding to the piercing shown in FIG.6, selects the orifice 1a to 1f capable of satisfying the flow amount, and drives the corresponding open-close member 2a to 2f. Accordingly, the plasma gas from the primary piping 3 is passed through any one of the selected orifice 1a to 1f, is then gathered by the secondary piping 4, and is then supplied to the plasma cutting torch ***B***.

The signal from the NC device 14 for initiating the piercing operation is also transmitted to the power source 24, in which the signal causes closure of the switch 25 and discharge between the electrode 21 and the nozzle 22 to form a pilot arc.

Subsequent to the formation of the pilot arc, the calculation section 5a in the control section 5 of the flow amount adjustment apparatus ***Aa*** calculates for increasing the flow amount of the plasma gas based on the flow amount information memorized into the memory section 5b, and then the orifice 1a to 1f is selected for sequentially increasing the flow amount based on the calculated result, and then a driving signal is transmitted to the open-close member 2a to 2f corresponding to the selected orifice 1a to 1f, and thereby the flow amount of plasma gas is increased. In association with the increase of the plasma gas, the pilot arc injected out from the nozzle 22 contacts the workpiece ***C*** to discharge between the electrode 21 and the nozzle 22 for forming a main arc, and thereby the cutting of the workpiece ***C*** is initiated.

In the foregoing state, the transverse carriage 13 (plasma cutting torch B) can be moved two-dimensionally between the rails 11 and within the travel range of the travel carriage 12 for cutting the workpiece ***C*** into a desired straight line or a curved line by controlling the drive of the travel motor and the transverse motor.

A signal of finishing the cutting is transmitted from the NC device to the control section 5 when the cutting of the workpiece ***C*** is finished, in which the calculation section 5a in the control section 5 calculates for reducing the flow amount of the plasma gas based on the flow amount information memorized into the memory section 5b, and then the orifice 1a to 1f is selected for sequentially reducing the flow amount based on the calculated result, and then a driving signal is transmitted to the open-close member 2a to 2f corresponding to the selected orifice 1a to 1f, and thereby the flow amount of plasma gas is sequentially reduced and stopped.

In this embodiment where the flow amount is adjusted in the foregoing manner, the minimum unit of increasing and reducing the flow amount is 1 liter per minute, in which the flow amount is adjusted in a step-by-step manner rather than a straight-line manner during increasing and reducing of the flow amount. Nevertheless, such value is a sufficient adjustment amount for the present plasma cutting torch ***B*** and does not serve to be an obstruction during use. In a case where the adjustment amount of 1 liter per minute is extensive, the flow amount can be adjusted in a smaller unit by adding an orifice capable of maintaining a lesser flow amount.

It is now to be noted that, although a processing apparatus using a plasma cutting torch is described in this embodiment, a laser cutting torch or a gas cutting torch can also be employed and used in the same manner. In a case where a tool requiring gas is used, a processing apparatus for welding or grooving can also be employed without changing the basic structure thereof.

As explained above in detail, the flow amount adjustment apparatus of this invention having plural orifices with different bore diameter for a predetermined flow amount, and open-close members formed in correspondence to each of the orifices can supply gas in a desired flow amount by calculating the flow amount required for the tool connected to the secondary piping, and then selecting an orifice and releasing the open-close member corresponding to the selected orifice based on the calculated result.

Accordingly, the flow amount adjustment apparatus ensures a flow amount with high reliability and is inexpensive unlike the mass flow device.

The processing apparatus of this invention can adjust the flow amount of the gas required for a processing tool and supply such gas to the tool. More particularly, a consistent amount of gas can be supplied to the tool without having to raising the cost of the apparatus.

The foregoing description of a preferred embodiment of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not be limited by the specification, but be defined by the claims set forth below.

## Claims

1. A flow amount adjustment apparatus comprising:
a plurality of orifices having different bore diameter for a predetermined flow amount, respectively, the orifices being opened and closed by an open-close member, respectively;
a primary piping connected to each of the orifices for supplying gas adjusted into a prescribed pressure; and
a secondary piping connected to each of the orifices for gathering gas passed through an opened orifice or a plurality of opened orifices,
wherein one orifice or a plurality of orifices capable of satisfying a prescribed flow amount are selected and opened.

2. The flow amount adjustment apparatus according to claim 1, further comprising a control section for selecting one orifice or a plurality of orifices capable of satisfying a prescribed flow amount and for sending a driving signal to an open-close member of the selected orifice or orifices,
wherein the open-close member is activated by the driving signal for opening and closing the orifice or orifices.

3. A processing apparatus comprising a processing torch selected from a plasma processing torch, a laser processing torch, and a gas processing torch,
wherein the processing torch is connected to the secondary piping of the flow amount adjustment apparatus according to claim 1 or 2.
